# FASCICULE DE BREVET EUROPEEN

(11) **EP 3 721 510 B1**
(45) Date de publication et mention de la délivrance du brevet: **20.04.2022**
(21) Numéro de dépôt: 18830925.6
(22) Date de dépôt: 05.12.2018
(51) Int. Cl.: H01R 13/523, H01R 43/26, H01R 13/533

(54) **PROCÉDÉ DE CONNEXION DE DEUX PARTIES DE CONNECTEUR**
VERFAHREN ZUM VERBINDEN ZWEIER VERBINDERTEILE
METHOD FOR CONNECTING TWO CONNECTOR PARTS

(30) Priorité: 05.12.2017 FR 1761667
(43) Date de publication de la demande: 14.10.2020
(73) Titulaire: Ixblue, 78100 Saint-Germain-en Laye (FR)
(72) Inventeur: ARDITTY, Hervé, 78100 Saint-germain-en-laye (FR); GRALL, Sébastien, 78100 Saint-germain-en-laye (FR); LAPORTE, Jonathan, 78100 Saint-germain-en-laye (FR); GIROUSSENS, Christian, 78100 Saint-germain-en-laye (FR); TOUIN, Gildas, 78100 Saint-germain-en-laye (FR); MOSCA, Frédéric, 78100 Saint-germain-en-laye (FR); DELORT, Eric, 78100 Saint-germain-en-laye (FR); CHAIZE, Carole, 78100 Saint-germain-en-laye (FR)
(74) Mandataire: Jacobacci Coralis Harle
(86) Numéro de dépôt international: PCT/FR2018/053119
(87) Numéro de publication internationale: WO 2019/110930

(56) Documents cités:
- EP-A1- 0 480 773
- EP-B1- 0 480 773
- WO-A1-99/60246
- GB-A- 2 501 249
- US-A- 3 665 509

## Description

### DOMAINE TECHNIQUE AUQUEL SE RAPPORTE L'INVENTION

La présente invention concerne de manière générale la connexion de câbles sous-marins destinés par exemple à transporter l'électricité produite par des hydroliennes.

Elle concerne plus particulièrement un procédé de connexion de deux parties de connecteur.

### ARRIERE-PLAN TECHNOLOGIQUE

Le document EP480773 divulgue un procédé de raccordement de conduites sous-marines entre un collecteur et un terminal de raccordement relié à un puits de pétrole adjacent, ledit terminal de raccordement reposant initialement sur une structure support, ledit procédé comprenant une étape de hissement du terminal de raccordement depuis sa structure support au moyen d'un outil d'installation et une étape de couplage au collecteur.

On connaît par ailleurs des connecteurs sous-marins connectables sous l'eau, caractéristique parfois désignée par l'appellation anglo-saxonne "*wet-mate*".

Dans les dispositifs connus, l'accouplement de deux connecteurs complémentaires nécessite un alignement précis d'un connecteur par rapport à l'autre selon un axe horizontal et l'exercice de forces horizontales opposées pour le raccordement des deux connecteurs.

Une telle conception implique l'utilisation de mécanismes d'alignement à 5 degrés de liberté dans le cas des connecteurs coaxiaux et à 6 degrés de liberté dans le cas des connecteurs à broches. D'autres mécanismes doivent par ailleurs être prévus pour l'exercice des forces horizontales de raccordement.

De ce fait, les connecteurs connus sont complexes et l'établissement d'une connexion par l'accouplement de deux connecteurs est une procédure délicate.

De telles solutions ne peuvent donc pas convenir lorsque le temps disponible pour effectuer la connexion est limité, comme c'est le cas par exemple pour la connexion de câbles sous-marins destinés à transporter l'électricité produite par des hydroliennes. En effet, de telles installations sont situées dans des lieux où le courant marin est important et où la période propice à une connexion (généralement pendant l'étale) est donc de courte durée.

### OBJET DE L'INVENTION

Dans ce contexte, la présente invention propose un procédé de connexion d'une partie mobile de connecteur à une partie fixe de connecteur conforme à la revendication 1.

On minimise ainsi le temps d'intervention nécessaire pour la connexion de la partie fixe et de la partie mobile, tout en bénéficiant de la protection de la partie fixe assurée par la coiffe préalablement à l'intervention.

### DESCRIPTION DETAILLEE D'UN EXEMPLE DE REALISATION

fixe assurée par la coiffe préalablement à l'intervention.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- les figures 1a à 1f représentent des étapes d'une séquence de connexion d'une partie mobile de connecteur à une partie fixe de connecteur ;
- la figure 2 est une vue en perspective éclatée d'un outil de levage utilisé dans cette séquence de connexion ;
- la figure 3 représente un exemple de réalisation de la partie mobile, de la partie fixe et d'une coiffe lorsque celles-ci sont assemblées ;
- la figure 4 représente les éléments de la figure 3 séparés les uns des autres ;
- la figure 5 représente une vue de détail d'ensembles de connexion utilisés dans certains éléments de la figure 3 ;
- la figure 6 représente un peigne métallique utilisé dans certains au moins des ensembles de connexion de la figure 5 ; et
- la figure 7 représente un ensemble hydraulique équipant la coiffe et la partie mobile.

On présente tout d'abord les étapes principales d'une séquence de connexion d'une partie mobile 4 de connecteur à une partie fixe 2 de connecteur. La description détaillée d'un exemple envisageable pour la mise en œuvre de ces parties fixe et mobile de connecteur est donnée plus bas.

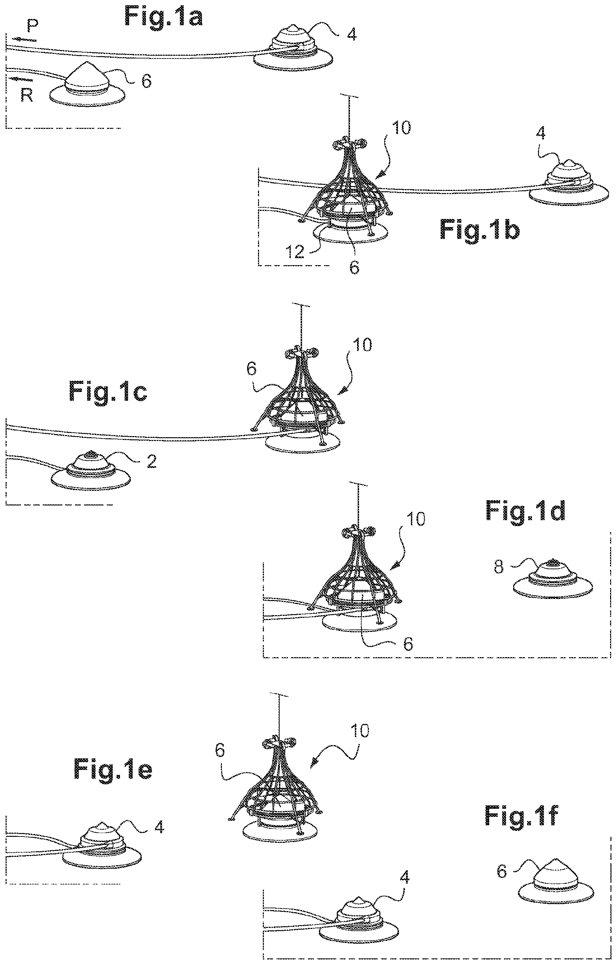

À l'état initial représenté en figure 1a, la partie fixe 2 (non visible sur cette figure) est couverte par une coiffe 6 (ce qui permet de protéger des pistes de connexion présentes sur la partie fixe 2), tandis que la partie mobile 4 repose sur un support 8 (non visible sur cette figure).

La partie fixe 2 et le support 8 sont quant à eux fixés sur un fond marin, comme schématiquement représenté sur les figures 1a à 1f.

La partie mobile 4 est par exemple reliée à un appareil de production d'électricité (ici une hydrolienne) ; la partie fixe 2 peut dans ce cas être reliée à un réseau de transport d'électricité. (Une configuration inverse est toutefois envisageable.)

La connexion de la partie mobile 4 à la partie fixe 2, telle que décrite à présent, permet ainsi de raccorder l'appareil de production d'électricité au réseau de transport d'électricité que cet appareil de production doit alimenter.

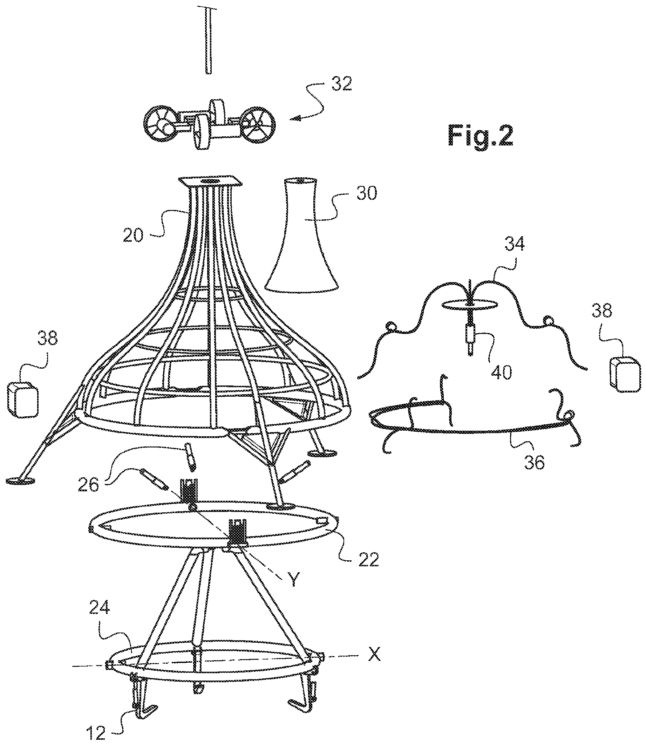

Le procédé de connexion débute par une étape de préhension de la coiffe 6 par un outil de levage 10 (décrit plus loin en détail en référence à la figure 2), comme représenté sur la figure 1b.

Dans l'exemple décrit ici, des crochets 12 prévus sur l'outil de levage 10 coopèrent avec une surface de préhension 14 prévue sur la coiffe 6. En pratique, la surface de préhension 14 est par exemple horizontale et tournée vers le bas, les crochets 12 étant mobiles et placés sous la surface de préhension 14 lors de cette étape de préhension.

L'outil de levage 10 porte ainsi la coiffe 6 (ici du fait du placement des crochets 12 sous la surface de préhension 14 et en utilisant la gravité) et peut donc déplacer cette coiffe 6 en direction de la partie mobile 4 (et du support 8 sur lequel repose cette partie mobile 4). L'outil de levage 10 possède ici pour ce faire des moyens de déplacement propres, comme expliqué ci-après en référence à la figure 2.

Le procédé de connexion se poursuit alors par le dépôt de la coiffe 6 sur la partie mobile 4 au moyen de l'outil de levage 10, comme représenté sur la figure 1c.

Précisément, l'outil de levage 10 se déplace jusqu'à venir disposer une surface externe inférieure de la coiffe 6 sur une surface externe supérieure de la partie mobile 4 (cette surface externe supérieure de la parte mobile 4 étant au moins partiellement complémentaire de la surface externe inférieure de la coiffe 6, comme décrit en détail plus loin). Les crochets 12 sont alors déplacés (ici écartés) afin de libérer la coiffe 6.

L'outil de levage 10 embarque alors l'ensemble coiffe 6 - partie mobile 4 afin de transporter cet ensemble en direction de la partie fixe 2. Dans l'exemple décrit, les crochets 12 sont déplacés de manière à coopérer avec une surface de préhension 16 (ici horizontale et tournée vers le bas) de telle sorte que l'outil de levage 10 porte la partie mobile 4 qui porte elle-même la coiffe 6.

Le procédé de connexion peut ainsi se poursuivre par une étape de transport, par l'outil de levage 10, de l'ensemble coiffe 6 - partie mobile 4 sur la partie fixe 2.

Pour ce faire, l'outil de levage 10 se déplace jusqu'à venir disposer une surface externe inférieure de la partie mobile 4 sur une surface externe supérieure de la partie fixe 2 (cette surface externe supérieure de la parte fixe 2 étant au moins partiellement complémentaire de la surface externe inférieure de la partie mobile 4, comme décrit en détail plus loin). Les crochets 12 sont alors déplacés (ici écartés) afin de libérer la coiffe 6.

Comme cela ressortira de la description de la partie fixe 2 et de la partie mobile 4 donnée plus loin, ce dépôt de la partie mobile 4 (qui porte par ailleurs la coiffe 6) sur la partie fixe 2 permet la connexion de la partie fixe 2 et de la partie mobile 4.

Cette situation est représentée sur la figure 1d.

L'outil de levage 10 peut alors embarquer la coiffe 6 (ici en déplaçant les crochets 12 sous la surface de préhension 14 de la coiffe 6) et se déplacer en direction du support 8 (visible sur la figure 1d) de manière à venir finalement déposer la coiffe 6 sur le support 8, comme représenté sur la figure 1e.

L'outil de levage 10 déplace alors les crochets 12 afin de libérer la coiffe 6 qui demeure alors sur le support 8, comme représenté sur la figure 1f (après départ de l'outil de levage 10).

Un exemple de réalisation de l'outil de levage 10 est à présent décrit en référence à la figure 2.

L'outil de levage 10 comprend un corps principal 20, formant ici une cage de forme évasée (avec un diamètre croissant vers le bas), réalisée par exemple à base de tubes métalliques.

Un premier anneau 22 est monté sur le corps principal 20 (ici dans la partie inférieure du premier anneau 22) avec une possibilité de rotation autour d'un axe Y (cet axe Y étant substantiellement horizontal lorsque l'outil de levage 10 est dans sa position de travail représentée sur les figures 1b à 1e et 2).

Un second anneau 24 est monté sur le premier anneau 22 (en étant ici entouré par le premier anneau 22) avec une possibilité de rotation autour d'un axe X perpendiculaire à l'axe Y (l'axe X étant lui aussi substantiellement horizontal lorsque l'outil de levage 10 est dans sa position de travail représentée sur les figures 1b à 1e et 2).

Le second anneau 24 porte les crochets 12 déjà mentionnés (ici au nombre de trois). Comme déjà indiqué, chaque crochet 12 peut être déplacé (ici au moyen de vérins) afin de venir se placer sous un objet à transporter (partie mobile 4 et/ou coiffe 6) ou, au contraire, de libérer cet objet.

Le montage du second anneau 24 sur le corps principal 20 par l'intermédiaire du premier anneau 22, et ainsi avec deux degrés de liberté en rotation, permet une orientation quelconque du second anneau 24, et donc de l'objet transporté (partie mobile 4 et/ou coiffe 6) par rapport au corps principal 20.

L'outil de levage 10 comprend également des doigts de centrage 26 (ici trois doigts de centrage 26 équi-répartis sur la circonférence de l'outil de levage 10), montés par exemple sur le corps principal 20. Chaque doit de centrage 26 est extensible et permet ainsi, lorsque son extrémité libre vient en appui sur l'objet transporté (partie mobile 4 et/ou coiffe 6), de faire varier l'orientation de l'objet transporté (grâce également aux possibilités de rotation autour des axes X et Y comme déjà indiqué).

Ceci permet en particulier d'aligner la partie mobile 4 à la partie fixe 2 lors de l'étape de connexion décrite ci-dessus en référence à la figure 1d.

L'outil de levage 10 comprend également un flotteur 30 et un ensemble de propulsion 32 (qui comprend ici quatre propulseurs) qui forment les moyens de déplacement propre susmentionnés.

L'outil de levage 10 comprend un réseau hydraulique supérieur 34 qui permet l'injection d'huile dans la partie mobile 4 au moyen d'une aiguille d'injection 40, comme expliqué plus loin.

L'outil de levage 10 comprend un réseau hydraulique inférieur 36 qui permet l'alimentation en huile des vérins susmentionnés (utilisés pour déplacer les crochets 12).

Le réseau hydraulique supérieur 34 et le réseau hydraulique inférieur 36 sont reliés à des réservoirs d'huile 38.

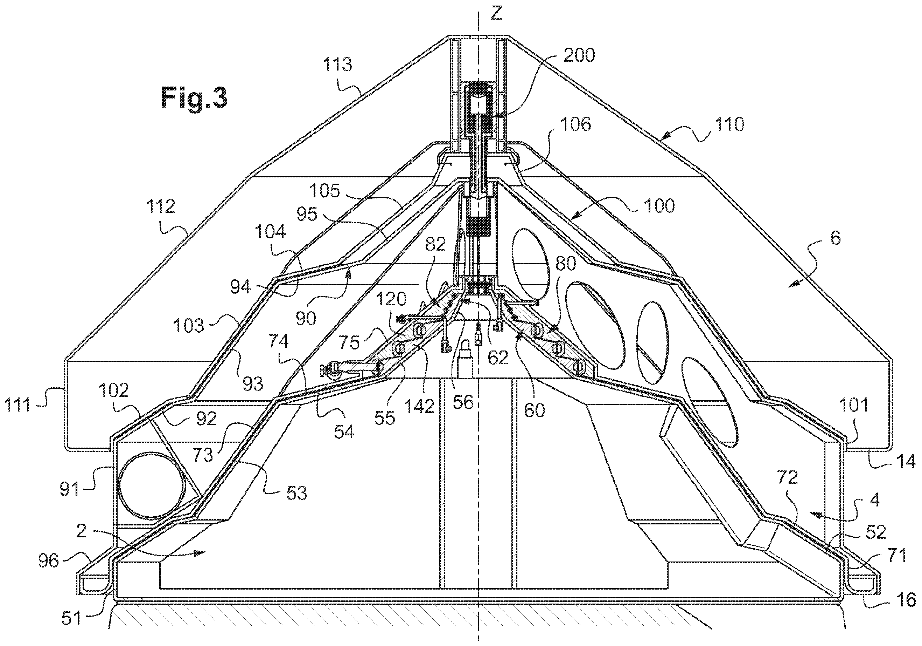

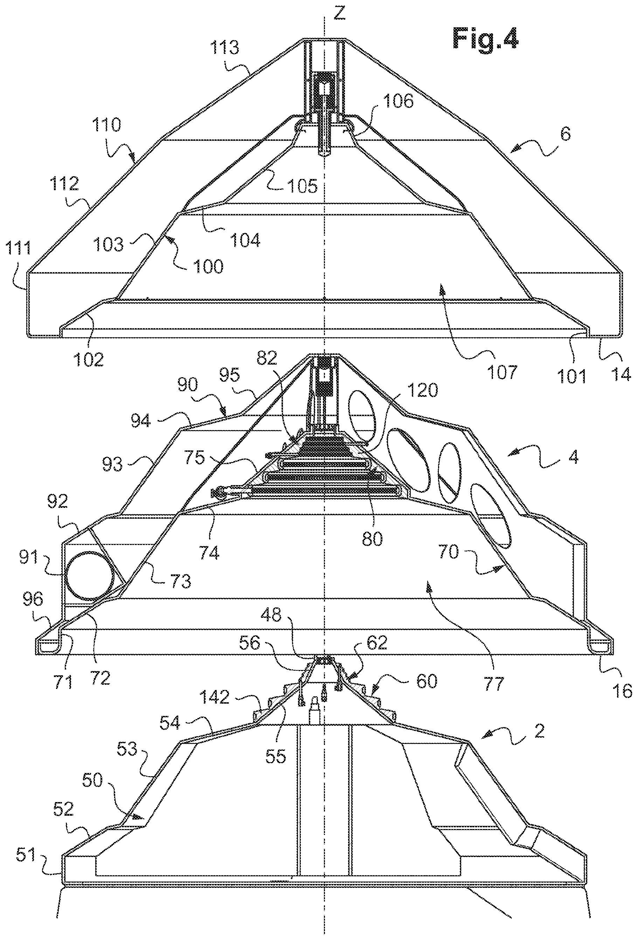

On décrit à présent en référence aux figures 3 et 4 un exemple de réalisation de la partie fixe 2, de la partie mobile 4 et de la coiffe 6.

La partie fixe 2 a une forme générale présentant une symétrie de révolution autour d'un axe Z (correspondant ici à la verticale au lieu d'implantation de cette partie fixe 2 sur le fond marin) et s'affinant en direction d'un sommet 48 (c'est-à-dire vers le haut). Autrement dit, la partie fixe 2 présente une surface en coupe horizontale continument décroissante selon l'axe Z et vers le haut.

Plus précisément la partie fixe 2 comprend un carter 50 (formant un capot extérieur convexe) qui comporte de bas en haut (c'est-à-dire de la base de la partie fixe 2 attachée au fond marin au sommet de la partie fixe 2) :
- une partie cylindrique 51 ;
- une première partie tronconique 52 dont les surfaces forment un premier angle avec l'horizontale (ce premier angle étant ici inférieur à 45°) ;
- une seconde partie tronconique 53 dont les surfaces forment un second angle avec l'horizontale (ce second angle étant ici supérieur au premier angle, ce second angle pouvant par exemple ainsi être supérieur à 45°) ;
- une troisième partie tronconique 54 dont les surfaces forment un troisième angle avec l'horizontale (ce troisième angle étant par exemple inférieur au second angle et ici inférieur au premier angle, le troisième angle pouvant par exemple être inférieur à 30°) ;
- une quatrième partie tronconique 55 dont les surfaces forment un quatrième angle avec l'horizontale (ce quatrième angle étant ici compris entre le premier angle et le second angle, et valant par exemple entre 40° et 50°) ;
- une cinquième partie tronconique 56 dont les surfaces forment un cinquième angle avec l'horizontale (ce cinquième angle étant supérieur au quatrième angle).

Comme bien visible sur les figures 3 et 4, ces parties cylindrique et tronconiques 51, 52, 53, 54, 55, 56 sont symétriques de révolution autour de l'axe Z déjà mentionné.

La partie cylindrique 51, la première partie tronconique 52, la seconde partie tronconique 53 et la troisième partie tronconique 54 forment en partie la surface externe supérieure de la partie fixe 2, dans des régions où (comme déjà indiqué en référence à la figure 1d) cette surface externe supérieure de la partie fixe 2 est complémentaire de la surface externe inférieure de la partie mobile 4 (décrite en détail plus bas).

La quatrième partie tronconique 55 porte un premier ensemble de connexion 60. Ce premier ensemble de connexion 60 comprend une pluralité de pistes conductrices annulaires (ici trois pistes conductrices annulaires) et s'étend ainsi sur tout le pourtour de la partie fixe 2, en entourant la quatrième partie tronconique 55.

La cinquième partie tronconique 56 porte un second ensemble de connexion 62. Ce second ensemble de connexion 62 comprend une pluralité de pistes conductrices annulaires (ici quatre pistes conductrices annulaires) et s'étend ainsi sur tout le pourtour de la partie fixe, en entourant la cinquième partie tronconique 56.

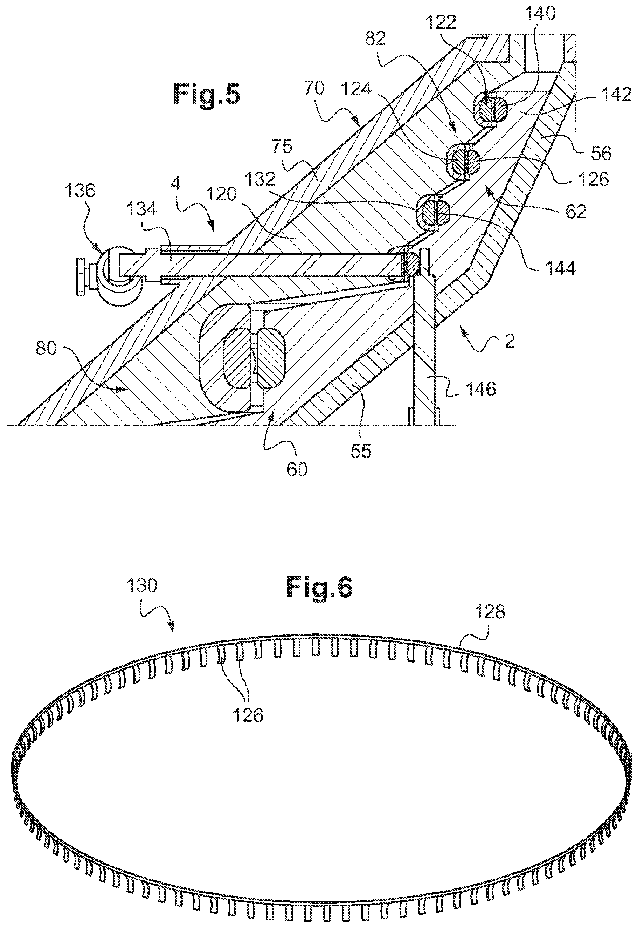

La constitution du premier ensemble de connexion 60 et du second ensemble de connexion 62 est exposée plus bas en référence aux figures 5 et 6.

La partie mobile 4 a une forme générale symétrique de révolution autour de l'axe Z, formant un chapeau apte à recouvrir la partie fixe 2 comme représenté sur la figure 3.

La partie mobile 4 comprend notamment pour ce faire un carter inférieur 70 qui définit une cavité (ou concavité) 77 tournée vers le bas (dans la position usuelle de la partie mobile 4 telle que représentée sur les figures) et conçue pour accueillir la partie fixe 2.

Précisément, le carter inférieur 70 comprend, en partant de la surface de préhension 16 horizontale et annulaire (formée ici dans ce carter inférieur 70) jusqu'au fond de la cavité 77 précitée :
- une partie cylindrique 71 ;
- une première partie tronconique 72 dont les surfaces forment un angle avec l'horizontale identique au premier angle mentionné plus haut ;
- une seconde partie tronconique 73 dont les surfaces forment un angle avec l'horizontale identique au second angle mentionné plus haut ;
- une troisième partie tronconique 74 dont les surfaces forment un angle avec l'horizontale identique au troisième angle mentionné plus haut ;
- une quatrième partie tronconique 75 dont les surfaces forment un cinquième angle avec l'horizontale (ce cinquième angle étant ici compris entre le premier angle et le second angle).

Comme bien visible en figure 3, la partie cylindrique 71, la première partie tronconique 72, la seconde partie tronconique 73 et la troisième partie tronconique 74 du carter inférieur 70 peuvent ainsi coopérer respectivement (par complémentarité de forme) avec la partie cylindrique 51, la première partie tronconique 52, la seconde partie tronconique 53 et la troisième partie tronconique 54 du carter 50 de la partie fixe 2.

On obtient ainsi la complémentarité partielle (déjà mentionnée) de la surface externe supérieure de la parte fixe 2 et de la surface externe inférieure de la partie mobile 4, qui permet un alignement automatique de la partie mobile 4 lorsqu'elle déposée sur la partie fixe 2 comme décrit ci-dessus en référence à la figure 1d.

La quatrième partie tronconique 75 loge quant à elle (ici dans sa partie inférieure) un premier ensemble de connexion 80 et (ici dans sa partie supérieure) un second ensemble de connexion 82.

Le premier ensemble de connexion 80 de la partie mobile 4 comporte une pluralité de pistes conductrices annulaires destinées à coopérer respectivement avec les pistes conductrices annulaires du premier ensemble de connexion 60 de la partie fixe 2, comme bien visible sur la figure 3 et expliqué plus en détail dans la suite en référence à la figure 5.

De même, le second ensemble de connexion 82 de la partie mobile 4 comporte une pluralité de pistes conductrices annulaires destinées à coopérer respectivement avec les pistes conductrices annulaires du second ensemble de connexion 62 de la partie fixe 2.

La partie mobile 4 comprend également un carter supérieur 90 qui comporte (de bas en haut sur les figures 3 et 4 et dans la position usuelle de la partie mobile 4) :
- une jupe annulaire 96 (formée ici d'une partie cylindrique entourant la surface de préhension 16 et d'une partie tronconique) ;
- une partie cylindrique 91 ;
- une première partie tronconique 92 dont les surfaces forment un angle avec l'horizontale identique au premier angle mentionné plus haut ;
- une seconde partie tronconique 93 dont les surfaces forment un angle avec l'horizontale identique au second angle mentionné plus haut ;
- une troisième partie tronconique 94 dont les surfaces forment un angle avec l'horizontale identique au troisième angle mentionné plus haut ;
- une quatrième partie tronconique 95 dont les surfaces forment un sixième angle avec l'horizontale (ce sixième angle étant ici compris entre le premier angle et le second angle, et pouvant être égal au cinquième angle mentionné plus haut).

La partie cylindrique 91, la première partie tronconique 92, la seconde partie tronconique 93 et la troisième partie tronconique 94 du carter supérieur 90 forment en partie la surface externe supérieure de la partie mobile 4, dans des régions où (comme déjà indiqué en référence à la figure 1c) cette surface externe supérieure de la partie mobile 4 est complémentaire de la surface externe inférieure de la coiffe 6 (décrite en détail ci-dessous).

La coiffe 6 a une forme générale symétrique de révolution autour de l'axe Z et comprend notamment un carter inférieur 100 qui définit une cavité (ou concavité) 107 tournée vers le bas (dans la position usuelle de la coiffe 6 telle que représentée sur les figures) de manière à accueillir (et donc à recouvrir) soit la partie fixe 2 (comme dans le cas des figures 1a et 1b), soit la partie mobile 4 (comme dans le cas des figures 1c et 1d).

Précisément, le carter inférieur 100 comprend, en partant de la surface de préhension 14 horizontale et annulaire (formée ici dans ce carter inférieur 100) jusqu'au fond de la cavité 107 précitée :
- une partie cylindrique 101 ;
- une première partie tronconique 102 dont les surfaces forment un angle avec l'horizontale identique au premier angle mentionné plus haut ;
- une seconde partie tronconique 103 dont les surfaces forment un angle avec l'horizontale identique au second angle mentionné plus haut ;
- une troisième partie tronconique 104 dont les surfaces forment un angle avec l'horizontale identique au troisième angle mentionné plus haut ;
- une quatrième partie tronconique 105 dont les surfaces forment un septième angle avec l'horizontale (ce septième angle étant ici compris entre le premier angle et le second angle et pouvant être par exemple égal au sixième angle susmentionné) ;
- une cinquième partie tronconique 106 dont les surfaces forment un huitième angle avec l'horizontale (ce huitième angle étant supérieur au septième angle précité).

Comme bien visible en figure 3, la partie cylindrique 101, la première partie tronconique 102, la seconde partie tronconique 103 et la troisième partie tronconique 104 de la coiffe 6 peuvent ainsi coopérer respectivement (par complémentarité de forme) avec la partie cylindrique 91, la première partie tronconique 92, la seconde partie tronconique 93 et la troisième partie tronconique 94 du carter supérieur 90 de la partie mobile 4.

On remarque que cela permet également que la partie cylindrique 101, la première partie tronconique 102, la seconde partie tronconique 103 et la troisième partie tronconique 104 de la coiffe 6 puissent coopérer respectivement (par complémentarité de forme) avec la partie cylindrique 51, la première partie tronconique 52, la seconde partie tronconique 53 et la troisième partie tronconique 54 du carter 50 de la partie fixe 2.

Ainsi, en utilisant des parties tronconiques formant un même angle avec l'horizontale sur le carter 50 de la partie fixe 2, sur le carter inférieur 70 de la partie mobile 4, sur le carter supérieur 90 de la partie mobile 4 et sur le carter inférieur 100 de la coiffe 6 (voir par exemple les parties tronconiques 52, 72, 92, 102), on permet une coopération par complémentarité de forme entre la coiffe 6 et la partie fixe 2, ou entre la coiffe 6 et la partie mobile 4, ou encore entre la partie fixe 2 et la partie mobile 4.

Comme bien visible sur les figures, il résulte d'ailleurs de ces dispositions que certaines parties tronconiques 72, 73, 74 du carter inférieur 70 de la partie mobile 4 sont en tout point parallèles à une partie tronconique 92, 93, 94 correspondante du carter supérieur 90 de la partie mobile 4.

Les parties tronconiques de la partie fixe 2, de la partie mobile 4 et de la coiffe 6 ayant en outre une forme cylindrique de révolution, elles permettent le positionnement automatique de la partie fixe 2 et/ou de la partie mobile 4 et/ou de la coiffe 6 l'une par rapport à l'autre (par simple dépôt de l'un de ces éléments sur l'autre).

La coiffe 6 comprend par ailleurs un carter supérieur 110 de forme générale tronconique. Le carter supérieur 110 comprend ici, de la surface de préhension 14 au sommet de la coiffe 6, une partie cylindrique 111, une première partie tronconique 112 (formant un huitième angle avec l'horizontale) et une seconde partie tronconique 113 (formant un neuvième angle avec l'horizontale, ce neuvième angle étant ici inférieur au huitième angle susmentionné).

Chacun des éléments décrits ci-dessus (coiffe 6 et partie mobile 4 notamment) a ainsi une forme générale tronconique particulièrement adaptée au placement de ces objets dans un fond marin, en particulier dans des régions de forts courants. Cette forme permet notamment en effet de limiter les efforts mécaniques créés au sein de ces éléments lorsqu'ils subissent les mouvements de l'eau dans laquelle ils sont plongés.

On décrit à présent plus en détail les ensembles de connexion 60, 62, 80, 82 en référence aux figures 5 et 6.

La figure 5 représente dans leur ensemble les seconds ensembles de connexion 62, 82 et en partie seulement les premiers ensembles de connexion 60, 80. La description qui suit vise ainsi les seconds ensembles de connexion 62, 82 mais est également applicable en ce qui concerne les premiers ensembles de connexion 60, 80.

Le second ensemble de connexion 82 de la partie mobile 4 comprend un élément intermédiaire 120 porté par le carter inférieur 70, en étant ici en contact avec ce carter inférieur 70 (précisément avec la quatrième partie tronconique 75). Cet élément intermédiaire 120 est donc accueilli ici dans la cavité 77 formée par le carter inférieur 70. Le carter inférieur 70 forme ainsi un support auquel est relié mécaniquement l'élément intermédiaire 120.

Comme visible sur les figures 3 et 4, l'élément intermédiaire 120 s'étend ici sur toute la hauteur de la quatrième partie tronconique 75 et joue ainsi le rôle d'élément intermédiaire pour le premier ensemble de connexion 80 de la partie mobile 4 et pour le second ensemble de connexion 82 de la partie mobile 4.

L'élément intermédiaire 120 s'étend sur tout le pourtour de la partie mobile 4 (c'est-à-dire sur tout le pourtour du carter inférieur 70).

L'élément intermédiaire 120 est réalisée dans un matériau élastiquement déformable (et isolant électriquement), tel qu'un polymère souple. L'élément intermédiaire 120 peut être réalisé en pratique dans une résine isolante, par exemple une résine époxyde diélectrique (telle qu'une résine Axson^{®} R22891-(98) durcie par un durcisseur Axson^{®} RE 2030).

L'élément intermédiaire 120 porte une pluralité d'éléments de contact 122 (précisément trois éléments de contact 122 pour le premier ensemble de connexion 80 et quatre éléments de contact pour le second ensemble de connexion 82).

Chaque élément de contact 122 est de forme générale circulaire et entoure l'axe Z (axe de symétrie de révolution de la partie mobile 4). Chaque élément de contact 122 s'étend ici sur toute la circonférence de l'élément intermédiaire 120. Comme expliqué ci-après, chaque élément de contact 122 est ici noyé dans l'élément intermédiaire 120 et affleure au niveau d'une surface de l'élément intermédiaire 120 tournée vers l'axe Z (c'est-à-dire vers le centre de la cavité 77).

Chaque élément de contact 122 comprend une couronne 124 et un ensemble de griffes 126 réparties sur toutes la circonférence de la couronne 124. La couronne 124 est de forme générale toroïdale et réalisée en matériau électriquement conducteur, ici en cuivre. Les griffes 126 sont portées par un support circulaire 128 (comme bien visible en figure 6), ce support circulaire 128 étant lui-même fixé à la couronne 124, par exemple au moyen d'une soudure par pointage. Le support circulaire 128 et les griffes 126 associées forment un peigne circonférentiel 130 représenté en figure 6.

Les éléments de contact 122 sont ici chacun enserrés dans un élément de liaison 132, réalisé par exemple en résine (de préférence en résine diélectrique). Cet élément de liaison 132 s'étend sur toute la circonférence de l'élément de contact 122. L'élément de liaison 132 s'étend autour de l'élément de contact 122 et présente une forme de C en section (comme visible en figure 5), définissant ainsi un logement accueillant la couronne 124 correspondante.

L'élément de liaison 132 est lui-même fixé au contact de l'élément intermédiaire 120.

Pour réaliser l'ensemble qui vient d'être décrit, on peut prévoir par exemple de mouler chaque élément de liaison 132 (en résine) au contact de la couronne 124 correspondante, de pré-positionner (typiquement dans un moule) les différents éléments de liaison 132 par rapport au carter inférieur 70, puis de couler l'élément intermédiaire 120 (en polymère souple) au contact du carter inférieur 70 d'une part et des éléments de liaison 132 d'autre part.

Comme visible en figure 5 pour l'une des couronnes 124, une tige conductrice 134 s'étend entre chaque couronne 124 (en étant au contact de cette couronne 124) et un ensemble de raccordement 136. Chaque tige conductrice 134 s'étend ainsi (ici selon une direction horizontale) à travers l'élément intermédiaire 120 (les tiges conductrices 134 pouvant être ainsi positionnées avant coulage de l'élément intermédiaire 120 selon le procédé qui vient d'être décrit).

Les différentes tiges conductrices 134 (en contact chacune avec une couronne 124) sont par exemple réparties sur la circonférence du carter inférieur 70.

L'ensemble de raccordement 136 associé à chaque tige conductrice 134 est relié électriquement à un fil conducteur d'un câble relié à la partie mobile 4.

Le second ensemble de connexion 62 de la partie fixe 2 comprend une pluralité de couronnes 140 (ici quatre couronnes 140) noyées dans un bloc isolant 142 et présentant une face cylindrique formant piste conductrice annulaire 144, cette piste conductrice annulaire 144 affleurant à la surface du bloc isolant 142.

Les couronnes 140 (et ainsi les pistes conductrices annulaire 144) s'étendent sur toute la circonférence du carter 50 de la partie fixe 2.

Le bloc isolant 142 est formé d'une matière rigide et situé au contact du carter 50 de la partie fixe 2, à l'extérieur du carter 50 (le bloc isolant 142 formant ainsi un support convexe portant les pistes conductrices annulaires 144).

Le bloc isolant 142 s'étend ici le long des quatrième et cinquième parties tronconiques de la partie fixe 2 (de sorte que ce bloc isolant couvre le premier ensemble de connexion 60 et le second ensemble de connexion 62), comme bien visible sur les figures 3 et 4.

Comme visible en figure 5 pour l'une des couronnes 140, une tige conductrice 146 s'étend entre chaque couronne 140 (en étant au contact de cette couronne 140) et un ensemble de raccordement (non représenté). Chaque tige conductrice 146 s'étend ainsi (ici selon une direction verticale) à travers le bloc isolant 142.

Les différentes tiges conductrices 146 (en contact chacune avec une couronne 140) sont par exemple réparties sur la circonférence du carter 50.

L'ensemble de raccordement (non représenté) associé à chaque tige conductrice 146 est relié électriquement à un fil conducteur d'un câble relié à la partie fixe 2.

Le diamètre des couronnes 140 portées par la partie fixe 2 (au niveau de la piste conductrice annulaire 144) est sensiblement égal (et en pratique légèrement supérieur) au diamètre interne du peigne circonférentiel 130 associé de sorte que les griffes 126 du peigne circonférentiel 130 (faisant partie d'un élément de contact 122) viennent se plaquer sur la piste conductrice annulaire 144 correspondante (et ce pour chaque paire de couronnes 124, 140) lorsque la partie mobile 4 est posée sur la partie fixe 2 comme représenté en figure 3.

Grâce à l'élément intermédiaire 120 réalisé dans un matériau élastiquement déformable, on assure un bon positionnement (et donc un bon contact électrique) entre les éléments de contact 122 et les pistes conductrices 144 respectivement associées, même lorsqu'il existe un défaut de positionnement entre le carter 50 de la partie fixe 2 et le carter inférieur 70 de la partie mobile 4 (ce défaut étant compensé par une déformation de l'élément intermédiaire 120).

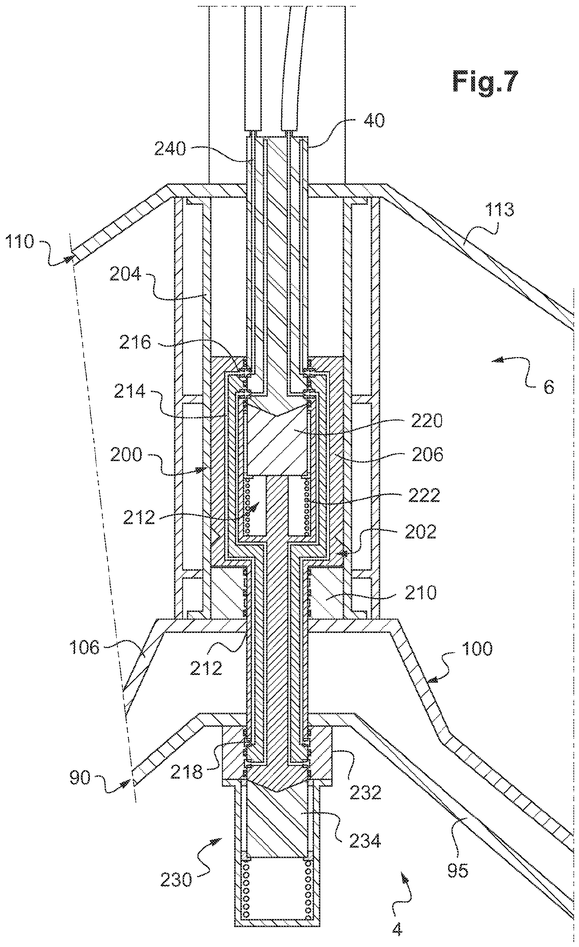

La figure 7 représente un ensemble hydraulique équipant la coiffe 6 et la partie mobile 4.

La coiffe 6 comprend un système hydraulique 200 conçu pour accueillir l'aiguille d'injection 40 de l'outil de levage 10 afin d'alimenter en fluide (ici de l'huile) soit la coiffe 6 elle-même, soit la partie mobile 4 lorsque cette partie mobile 4 porte la coiffe 6, comme dans la situation représentée en figure 1d et décrite plus haut.

L'alimentation en fluide de la coiffe 6 ou de la partie mobile 4 est utilisée lorsque l'élément concerné (coiffe 6 ou partie mobile 4) est déposé sur un autre élément (partie fixe 2 ou support 8) afin de chasser l'eau de mer présente entre ces deux éléments.

Le système hydraulique 200 comprend un piston 202 logé (avec possibilité de coulissement) dans un corps de vérin 204 monté entre le carter inférieur 100 de la coiffe 6 et le carter supérieur 110 de la coiffe 6. Le piston 202 et le corps de vérin 204 s'étendent ici selon l'axe de symétrie Z de la coiffe 6.

Le piston 202 comprend un coulisseau 206 monté à coulissement dans le corps de vérin 204 et une aiguille 208 s'étendant à partir du coulisseau 206 en direction du carter inférieur 100 de la coiffe 6.

L'aiguille 208 traverse un système de distribution 210 équipant la coiffe 6 et, lorsque le coulisseau est en position basse dans le corps de vérin 204 comme représenté sur les figures 3, 4 et 7, s'étend à travers une ouverture 212 ménagée dans le carter inférieur 100 afin d'atteindre la partie mobile 4 comme expliqué plus bas.

Le coulisseau 206 comprend un logement interne 212 dimensionné de manière à accueillir l'aiguille d'injection 40 de l'outil de levage 10 (c'est-à-dire ayant des dimensions internes identiques aux dimensions externes de l'aiguille d'injection 40, ici un diamètre interne égal au diamètre externe de l'aiguille d'injection 40).

Le piston 202 comprend au moins un circuit hydraulique 214 (ici quatre tels circuits hydrauliques) qui s'étend entre un orifice d'entrée 216, formé sur une paroi du coulisseau 206 formant le logement interne 212, et un orifice de sortie 218, formé sur une paroi externe de l'aiguille 208. Le circuit hydraulique 214 s'étend donc à l'intérieur du coulisseau 206 et de l'aiguille 208.

Le logement interne 212 accueille par ailleurs un bouchon 220 mobile entre une première position (non représentée) dans laquelle ce bouchon 220 obstrue l'orifice d'entrée 216 (ici les quatre orifices d'entrée) et une seconde position dans laquelle ce bouchon laisse libre l'orifice d'entrée 216.

On prévoit ici en outre des moyens de rappel élastique 222 (tel qu'un ressort) positionnés dans le logement interne 212 de manière solliciter le bouchon 220 vers la première position, le bouchon 220 étant amené dans la seconde position sous l'effet de l'aiguille d'injection 40 de la coiffe 6 lorsque cette aiguille d'injection 40 est insérée dans le logement interne 212.

La partie mobile 4 comprend elle aussi un système hydraulique 230. Ce système hydraulique 230 comprend un système de distribution 232 qui s'étend autour d'un espace central destiné à accueillir l'aiguille 208 du système hydraulique 200 de la coiffe 6, comme bien visible en figure 7.

Le système hydraulique 230 de la partie mobile 4 comprend également un bouchon 234 ramené par des moyens de rappel élastique 236 (ici un ressort) dans l'espace central précité de manière à obstruer des orifices (non représentés) du système de distribution 232 en l'absence de l'aiguille 208. Comme représenté sur la figure 7, le bouchon 234 est toutefois déplaçable à l'encontre de la force exercée par les moyens de rappel élastique 236 lorsque l'aiguille 208 est insérée dans l'espace central à travers une ouverture 236 formée dans le carter supérieur 90 de la partie mobile 4.

Dans la position représentée en figure 7, l'aiguille d'injection 40 de l'outil de levage 10 est insérée dans le logement interne 212 de sorte qu'au moins un circuit hydraulique 240 de cette aiguille d'injection 40 (ici quatre tels circuits hydrauliques) communique(nt) (chacun), via l'orifice d'entrée 216, avec un circuit hydraulique 214 du système hydraulique 200 de la coiffe 6.

Par ailleurs, l'aiguille 208 du système hydraulique 200 étant insérée dans l'espace central entouré par le système de distribution 232 de la partie mobile 4, l'orifice de sortie 218 du circuit hydraulique 214 (ou de chaque tel circuit hydraulique) se trouve au droit d'un orifice (non représenté) du système de distribution 232.

L'outil de levage 10 peut ainsi alimenter en fluide (ici en huile) le système de distribution 232 de la partie mobile 4 (via le circuit hydraulique 240 de l'aiguille d'injection 40 et le circuit hydraulique 214 du système hydraulique 200 de la coiffe 6), le système de distribution 232 étant par ailleurs conçu pour injecter le fluide entre la partie mobile 4 et la partie fixe 2 lorsque l'ensemble partie mobile 4 - coiffe 6 est déposé sur la partie fixe 2 comme représenté sur la figure 1d.

Par ailleurs, lorsque le coulisseau 206 est en position haute dans le corps de vérin 204, l'orifice de sortie 218 se trouve au droit d'un orifice du système de distribution 210 de la coiffe 6. L'outil de levage 10 peut ainsi dans ce cas alimenter en fluide (ici en huile) le système de distribution 210 de la coiffe 6 (via le circuit hydraulique 240 de l'aiguille d'injection 40 et le circuit hydraulique 214 du système hydraulique 200 de la coiffe 6), le système de distribution 210 étant par ailleurs conçu pour injecter le fluide entre la coiffe 6 et l'élément (par exemple le support 8 à l'étape 1e décrite plus haut) sur lequel la coiffe 6 est déposée.

## Revendications

1. Procédé de connexion d'une partie mobile (4) de connecteur à une partie fixe (2) de connecteur, **caractérisé en ce qu'**initialement, la partie mobile (4) est posée sur un support (8) et la partie fixe (2) est recouverte par une coiffe (6), et **en ce que** le procédé comprend les étapes suivantes :
- préhension de la coiffe (6) par un outil de levage (10) ;
- dépôt de la coiffe (6) sur la partie mobile (4) au moyen de l'outil de levage (10) ;
- transport, par l'outil de levage (10), de l'ensemble coiffe (6) - partie mobile (4) sur la partie fixe (2) pour connexion de la partie fixe (2) et de la partie mobile (4).

2. Procédé de connexion selon la revendication 1, dans lequel la partie mobile (4) comprend un carter inférieur (70) présentant au moins une partie tronconique (72 ; 73 ; 74) et un carter supérieur (90) présentant au moins une partie tronconique (92 ; 93 ; 94), la partie tronconique (72 ; 73 ; 74) du carter inférieur (70) étant en tout point parallèle à la partie tronconique (92 ; 93 ; 94) du carter supérieur (90).

3. Procédé de connexion selon la revendication 1 ou 2, comprenant une étape ultérieure de dépôt de la coiffe (6) sur le support (8) par l'outil de levage (10).

4. Procédé de connexion selon l'une des revendications 1 à 3, dans lequel la partie fixe (2) est fixée à un fond marin.

5. Procédé de connexion selon l'une des revendications 1 à 4, dans lequel le support (8) est fixé à un fond marin.

6. Procédé de connexion selon l'une des revendications 1 à 5, dans lequel la partie fixe (2) est reliée à un réseau de transport d'électricité.

7. Procédé de connexion selon l'une des revendications 1 à 6, dans lequel la partie mobile (4) est reliée à un appareil de production d'électricité.

8. Procédé de connexion selon l'une des revendications 1 à 7, dans lequel la partie fixe (2) comprend un capot extérieur convexe (50) présentant une symétrie de révolution.

9. Procédé de connexion selon la revendication 8, dans lequel la partie fixe (2) comprend une pluralité de pistes électriques circulaires (144).

10. Procédé de connexion selon la revendication 8 ou 9, dans lequel la partie mobile (4) présente une concavité (70) conçue pour coopérer avec ledit capot extérieur (50).

11. Procédé de connexion selon l'une des revendications 1 à 10, dans lequel la coiffe (6) comprend des moyens de réception (216) d'un fluide et des moyens d'injection (218) dudit fluide dans au moins une conduite ménagée dans le connecteur mobile (4).

## Patentansprüche

1. Verfahren zum Verbinden eines beweglichen Verbinderteils (4) mit einem festen Verbinderteil (2), bei dem der bewegliche Teil (4) ursprünglich auf einem Träger (8) angeordnet ist und der feste Teil (2) ursprünglich mit einer Kappe (6) bedeckt ist und daß das Verfahren die folgenden Schritte aufweist:
- Erfassen der Kappe (6) mittels eines Hebewerkzeugs (10);
- Ablegen der Kappe (6) mittels des Hebewerkzeugs (10) auf dem beweglichen Teil (4);
- Transportieren der Gesamtheit Kappe (6) - beweglicher Teil (4) mittels des Hebewerkzeugs (10) auf den festen Teil (2) zum Verbinden des festen Teils (2) und des beweglichen Teils (4).

2. Verfahren zum Verbinden gemäß Anspruch 1, bei dem der bewegliche Teil (4) ein unteres Gehäuse (70), das wenigstens einen kegelstumpfförmigen Teil (72; 73; 74) hat, und ein oberes Gehäuse (90), das wenigstens einen kegelstumpfförmigen Teil (92; 93; 94) hat, aufweist, wobei der kegelstumpfförmige Teil (72; 73; 74) des unteren Gehäuses (70) an jedem Punkt zum kegelstumpfförmigen Teil (92; 93; 94) des oberen Gehäuses (90) parallel ist.

3. Verfahren zum Verbinden gemäß Anspruch 1 oder 2, das einen späteren Schritt des Ablegens der Kappe (6) mit dem Hebewerkzeug (10) auf dem Träger (8) aufweist.

4. Verfahren zum Verbinden gemäß einem der Ansprüche 1 bis 3, bei dem der feste Teil (2) auf einem Meeresboden gefestigt ist.

5. Verfahren zum Verbinden gemäß einem der Ansprüche 1 bis 4, bei dem der Träger (8) auf einem Meeresboden befestigt ist.

6. Verfahren zum Verbinden gemäß einem der Ansprüche 1 bis 5, bei dem der feste Teil (2) mit einem Netz zum Transport von Elektrizität verbunden ist.

7. Verfahren zum Verbinden gemäß einem der Ansprüche 1 bis 6, bei dem der bewegliche Teil (4) mit einem Gerät zum Erzeugen von Elektrizität verbunden ist.

8. Verfahren zum Verbinden gemäß einem der Ansprüche 1 bis 7, bei dem der feste Teil (2) eine konvexe äußere Haube (50) mit Rotationssymmetrie aufweist.

9. Verfahren zum Verbinden gemäß Anspruch 8, bei dem der feste Teil (2) eine Anzahl ringförmiger elektrischer Pisten (144) aufweist.

10. Verfahren zum Verbinden gemäß Anspruch 8 oder 9, bei dem der bewegliche Teil (4) eine Vertiefung (70) aufweist, die dazu ausgelegt ist, mit der äußeren Haube (50) zusammenzuwirken.

11. Verfahren zum Verbinden gemäß einem der Ansprüche 1 bis 10, bei dem die Kappe (6) Mittel (216) zum Aufnehmen eines Fluids und Mittel (218) zum Einspritzen des Fluids in wenigstens eine im beweglichen Verbinder (4) ausgeführte Leitung aufweist.

## Claims

1. A method for connecting a movable connector part (4) to a stationary connector part (2), **characterized in that**, initially, the movable part (4) is placed on a support (8) and the stationary part (2) is covered by a cap (6), and **in that** the method comprises the following steps:
- gripping the cap (6) using a lifting tool (10);
- depositing the cap (6) onto the movable part (4) using the lifting tool (10);
- transporting, using the lifting tool (10), the cap (6) - movable part (4) unit onto the stationary part (2) for connecting the stationary part (2) and the movable part (4) to each other.

2. The connection method according to claim 1, wherein the movable part (4) comprises a lower casing (70) having at least one truncated portion (72, 73, 74) and an upper casing (90) having at least one truncated portion (92, 93, 94), the truncated portion (72, 73, 74) of the lower casing (70) being, at any point, parallel to the truncated portion (92, 93, 94) of the upper casing (90).

3. The connection method according to claim 1 or 2, comprising a subsequent step of depositing the cap (6) onto the support (8) using the lifting tool (10).

4. The connection method according to one of claims 1 to 3, wherein the stationary part (2) is fixed to a seabed.

5. The connection method according to one of claims 1 to 4, wherein the support (8) is fixed to a seabed.

6. The connection method according to one of claims 1 to 5, wherein the stationary part (2) is connected to an electric power transmission system.

7. The connection method according to one of claims 1 to 6, wherein the movable part (4) is connected to an electric power generator.

8. The connection method according to one of claims 1 to 7, wherein the stationary part (2) comprises a convex external cover (50) having a rotational symmetry.

9. The connection method according to claim 8, wherein the stationary part (2) comprises a plurality of circular electrical tracks (144).

10. The connection method according to claim 8 or 9, wherein the movable part (4) has a concavity (70) designed to cooperate with said external cover (50).

11. The connection method according to one of claims 1 to 10, wherein the cap (6) comprises means (216) for receiving a fluid and means (218) for injecting said fluid into at least one duct formed in the movable connector (4).
